**Europäisches Patentamt**

**European Patent Office**

**Office européen des brevets**

(11) Veröffentlichungsnummer: **0 138 062 B1**

(12) # EUROPÄISCHE PATENTSCHRIFT

(45) Veröffentlichungstag der Patentschrift: 09.08.89

(51) Int. Cl.⁴: **G 06 F 3/16**

(21) Anmeldenummer: **84110890.5**

(22) Anmeldetag: **12.09.84**

(54) **Signalprozessorsystem zur funktionalen Integration einer automatischen Spracheingabe/-ausgabe.**

(30) Priorität: 29.09.83 DE 3335357

(43) Veröffentlichungstag der Anmeldung: 24.04.85 Patentblatt 85/17

(45) Bekanntmachung des Hinweises auf die Patenterteilung: 09.08.89 Patentblatt 89/32

(84) Benannte Vertragsstaaten: AT DE FR GB IT

(73) Patentinhaber: Siemens Aktiengesellschaft Berlin und München
Wittelsbacherplatz 2
D-8000 München 2 (DE)

(72) Erfinder: Höge, Harald, Dr. phil. nat.
Hauptstrasse 19
D-8131 Unterbrunn (DE)

(56) Entgegenhaltungen:
EP—A— 0 021 287
FR—A— 2 449 311
ELEKTRONIK, Band 29, Nr. 11, Mai 1980, MÜNCHEN (DE), Seiten 67-72. H. SCHMID: "Schnittstellen zwischen monolithischen Prozessoren und der Aussenwelt"
IEEE ELECTRO, Band 8, suppl. 1983, NEW YORK (US), 18-20 April 1983, Seiten 1-5. W.K. GASS: "The TMS32010 provides speech I/O for the personal computer"
IBM TECHNICAL DISCLOSURE BULLETIN, Band 24, Nr. 11B, April 1982, NEW YORK (US), Seiten 5890-5896. G. L. CRAUWELS et al.: "Voice response for data processing equipment"

## Beschreibung

Signalprozessorsystem zur funktionalen Integration einer automatischen Spracheingabe/-ausgabe

Die vorliegende Erfindung betrifft ein Signalprozessorsystem zur funktionalen Integration einer automatischen Spracheingabe/-ausgabe.

Zur aufwandsgünstigsten Gestaltung einer Mensch/MaschineSchnittstelle über Sprache werden Systeme mit einer sog. integrierten Spracheingabe und Sprachausgabe benötigt. Die in den letzten Jahren entwickelten VLSI-Signalprozessoren erlauben Systemarchitekturen, die zu kompakten und leistungsfähigen Systemen führen.

Bisherige Spracheingabe- und Sprachausgabesysteme gehen entweder von getrennten Spracheingabe- und Sprachausgabeeinheiten oder von wenig kompakten Systemarchitekturen aus.

Aus « IEEE Elektro », Band 8, 1983, 18. bis 20. April 1983, Seiten 1 bis 5 ist bereits bekannt, daß Systemarchitekturen eine Vielzahl von Funktionen bewältigen können, darunter die der Ein- und Ausgabefunktion.

Aus EP-A-00 21 287 ist ferner bereits bekannt, mittels Schalter und Steuerlogik zwei Prozessoren so anzuordnen, daß sie zu einem gemeinsamen Speicher Zugriff bekommen.

Schließlich ist aus der Zeitschrift « Elektronik », Band 29, Nr. 11, Mai 1980, Seiten 67 bis 72 ferner bekannt, wie mehrere Prozessoren, die über einen gemeinsamen Speicher verfügen, mit einem Systemprozessor mittels Schalter- und Steuerlogik Daten austauschen. Die erforderliche Synchronisation der Prozessoren mit dem Systemprozessor erfolgt dabei über eine getrennte Synchronisationsleitung.

Der vorliegenden Erfindung liegt die Aufgabe zugrunde, ein Signalprozessorsystem zur funktionalen Integration einer automatischen Spracheingabe/-ausgabe zu schaffen, die sich der Fortschritte der VLSI-Technologie bedient.

Zur Lösung dieser Aufgabe wird ein Signalprozessorsystem zur funktionalen Integration einer automatischen Spracheingabe/-ausgabe geschaffen, die durch die im Patentanspruch 1 angegebenen Merkmale charakterisiert ist.

Vorteilhafte Weiterbildungen der Erfindung sind durch die in den Unteransprüchen angegebenen Merkmale gekennzeichnet.

Im folgenden wird die vorliegende Erfindung anhand einer ein bevorzugtes Ausführungsbeispiel für die Erfindung betreffenden Figur im einzelnen beschrieben.

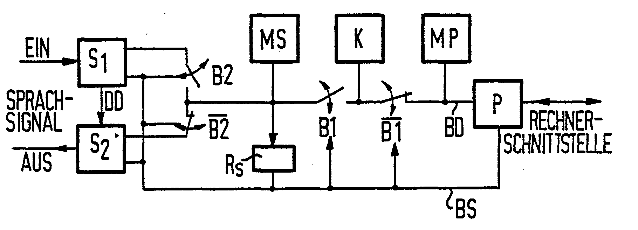

Die Figur zeigt das erfindungsgemäße Signalprozessorsystem zur Spracheingabe/-ausgabe. Das System besteht aus zwei miteinander gekoppelten Signalprozessoren SI, S2 mit einem zugehörigen Speicher MS, einem Systemprozessor P mit einem Systemprozessorspeicher MP und einem zentralen Speicher K, auf den wahlweise einer der Signalprozessoren oder der Systemprozessor zugreifen kann. Die Speicher sind über einen Datenbus BD mit den Prozessoren verbunden. Die Busverbindungen sind durch Schalter B1, $\overline{B1}$, B2, $\overline{B2}$, die von dem Systemprozessor P über einen Steuerbus BS gesteuert werden, bestimmt. Die Schalter B1, $\overline{B1}$ sind wie die Schalter B2, $\overline{B2}$ wechselseitig zu öffnen bzw. zu schließen. Damit ist gewährleistet, daß entweder einer der Signalprozessoren oder der Systemprozessor Zugriff zu dem zentralen Speicher K hat, bzw. daß entweder der Signalprozessor S1 oder der Signalprozessor S2 Zugriff zu dem Signalprozessorspeicher MS bzw. dem zentralen Speicher K hat. Über einen Steuerbus BS erfolgt mittels eines Steuerregisters RS die erforderliche Synchronisation der Prozessoren. Auf diese Weise kann beispielsweise der Systemprozessor P InterruptVorgänge und Reset-Vorgänge bei den Signalprozessoren S1, S2 bewirken. Auf ähnliche Weise kann derjenige Signalprozessor, der Zugriff zu dem Datenbus BD hat, über das Steuerregister RS seinen Zustand dem Systemprozessor P mitteilen und ggf. bei diesem einen Interrupt-Zustand auslösen.

Die Signalprozessoren SI und S2 sind so geartet, daß sie entweder eigenständig oder über eine geeignete Steuerschaltung Uaten über den Datenbus BD abspeichern oder über diesen einlesen können.

Zum direkten Datenaustausch zwischen den Signalprozessoren ist ein Direktdatenweg DD vorgesehen.

Das erfindungsgemäße Signalprozessorsystem gewährleistet, daß alle drei Prozessoren S1, S2, P selbständig arbeiten können.

Wenn einer der Prozessoren seine jeweilige Aufgabe abgearbel-tet hat, liefert er über den Steuerbus BS eine entsprechende Meldung, woraufhin ggf. Daten über den gemeinsamen Datenbus und ggf. über den zentralen Speicher K an alle übrigen Einrichtungen gesendet und von diesen empfangen werden können.

## Patentansprüche

1. Signalprozessorsystem zur funktionalen Integration einer automatischen Spracheingabe/-ausgabe, bei dem ein erster Signalprozessor (SI) und ein zweiter Signalprozessor (S2), welche Signalprozessoren (S1, S2) miteinander gekoppelt sind, mit einem diesen gemeinsam zugeordneten Signalprozessorspeicher (MS) vorgesehen sind, bei dem ein Systemprozessor (P) und ein diesem zugeordneter Arbeitsspeicher (MP) vorgesehen sind, bei dem ein zentraler Speicher (K), auf den wahlweise einer der beiden Signalprozessoren (S1 oder S2) oder der Systemprozessor (P) zugreifen kann, vorgesehen ist, bei dem ein Datenbus (BD) vorgesehen ist, in den erste Schalter (B1, $\overline{B1}$) und zweite Schalter (B2, $\overline{B2}$) eingefügt sind, bei der ein Steuerbus (BS), an den ein Steuerregister (RS) und die Steuereingänge/-ausgänge der Prozessoren (S1, S2, P) angeschlossen sind, vorgesehen ist und bei dem die ersten Schalter (B1, B̄1) und die zweiten Schalter (B2, B̄2) jeweils wechselseitig zu öffnen bzw. zu schließen sind und so angeordnet sind, daß entweder jeweils einer der Signalprozessoren (S1 oder S2) oder der Systemprozessor (P) auf den zentralen Speicher (K) zugreifen kann und entweder der erste Signalprozessor (S1) oder der zweite Signalprozessor (S2) auf den Signalprozessorspeicher (MS) zugreifen kann, dadurch gekennzeichnet, daß die Signalprozessoren (SI, S2) derart beschaffen sind, daß sie jeweils eigenständig Daten über den Datenbus (BD) lesen oder über diesen abspeichern können, und daß zum Zwecke eines direkten Datenaustausches zwischen den Signalprozessoren (SI, S2) ein Direktdatenweg (DD) zwischen diesen vorgesehen ist.

2. Signalprozessorsystem nach Anspruch 1, dadurch gekennzeichnet, daß die Signalprozessoren (SI, S2) derart beschaffen sind, daß sie mit Hilfe einer Zusatzeinrichtung, beispielsweise einer Schnittstellensteuerung, eigenständig Daten über den Datenbus (BD) einlesen oder über diesen abspeichern können.

3. Verfahren zum Betrieb eines Signalprozessorsystems nach einem der vorhergehenden Ansprüche, bei dem eine erforderliche Synchronisation der Prozessoren (SI, S2, P) über den Steuerbus (BS) und mittels des Steuerregisters (RS) durchgeführt wird, so daß der Systemprozessor (P) Interrupt-Vorgänge, Reset-Vorgänge usw. bewirken kann, bei dem derjenige der beiden Signalprozessoren (SI oder S2), der jeweils Zugriff zu dem Datenbus (BD) und damit zu dem zentralen Speicher (K) hat, eine entsprechende Meldung bzw. ein Interrupt-Signal mittelbar über das Steuerregister (RS) an den Systemprozessor (P) abgibt und bei dem die Schalter (B1, B̄1 ; B2, B̄2) von dem Systemprozessor (P) über den Steuerbus (BS) gesteuert werden, dadurch gekennzeichnet, daß eine Meldung von demjenigen der Prozessoren (S1, S2, P), der seine Aufgabe erledigt hat, über den Steuerbus (BS) an die jeweils anderen Einrichtungen gesendet wird und daß ein jeweils erforderlicher Datenaustausch über den zentralen Speicher (K) durchgeführt wird.

## Claims

1. Signal-processor system providing functional integration of an automatic speech input/output, in which a first signal processor (SI) and a second signal processor (S2), which signal processors (S1, S2) are coupled to each other, are provided with a signalprocessor memory (MS) assigned jointly to the latter, in which a system processor (P) and a main memory (MP) assigned to the latter are provided, in which a central memory (K), which can be accessed by one of the two signal processors (S1 or S2) or the system processor (P) according to choice, is provided, in which a data bus (BD) is provided, into which first switches (B1, B̄1) and second switches (B2, B̄2) are inserted, in which a control bus (BS), to which a control register (RS) and the control inputs/outputs of the processors (S1, S2, P) are connected, is provided and in which the first switches (B1, B̄1) and the second switches (B2, B̄2) can in each case be opened or closed alternately and are arranged such that either in each case one of the signal processors (S1 or S2) or the system processor (P) can access the central memory (K) and either the first signal processor (SI) or the second signal processor (S2) can access the signal processor memory (MS), characterized in that the signal processors (S1, S2) are created in such a way that they can in each case independently read data via the data bus (BD) or store data via the latter, and in that for the purpose of a direct data exchange between the signal processors (S1, S2) a direct data path (DD) is provided between the latter.

2. Signal-processor system according to Claim 1, characterized in that the siqnal processors (S1, S2) are created in such a way that they can, with the aid of an additional device, for example an interface control, independently read in data via the data bus (BD) or store data via the latter.

3. Process for the operation of a signal-processor system according to one of the preceding claims, in which a necessary synchronization of the processors (S1, S2, P) is carried out via the data bus (BS) and by means of the control register (RS), so that the system processor (P) can effect interrupt operations, reset operations etc., in which that one of the two signal processors (S1 or S2) which has access in a particular case to the data bus (BD), and thus to the central memory (K), emits a corresponding message or an interrupt signal indirectly via the control register (RS) to the system processor (P) and in which the switches (B1, B̄1 ; B2, B̄2) are controlled by the system processor (P) via the control bus (BS), characterized in that a message from that one of the processors (S1, S2, P) which has completed its task is sent via the control bus (BS) to the respectively other devices and in that a respectively necessary data exchange is carried out via the central memory (K).

## Revendications

1. Système de processeurs de traitement de signaux pour l'intégration fonctionnelle d'une entrée/sortie automatique de la parole, dans lequel il est prévu un premier processeur (S1) de traitement de signaux et un second processeur (S2) de traitement de signaux, qui sont couplés entre eux, ainsi qu'une mémoire (MS) associée en commun à ces processeurs, dans lequel il est prévu un processeur de système (P) et une mémoire de travail (MP) associée à ce processeur, dans lequel il est prévu une mémoire centrale (K), à laquelle peuvent avoir accès, au choix, l'un des deux processeurs (S1 ou S2) de transmission de signaux ou le processeur système (P), dans lequel il est prévu un bus (BD) de transmission de données, dans lequel sont insérés des premiers

interrupteurs (B1, $\overline{B1}$) et des seconds interrupteurs (B2, $\overline{B2}$), dans lequel il est prévu un bus de commande (BS), auquel sont raccordés un registre de commande (RS) et les entrées/sortie de commande des processeurs (S1, S2, P) et dans lequel les premiers interrupteurs (B1, $\overline{B1}$) et les deux seconds interrupteurs (B2, $\overline{B2}$) doivent être respectivement ouverts ou fermés en alternance et sont disposés de telle sorte que soit l'un des processeurs (S1 ou S2) de transmission de signaux, soit le processeur de système (P) peut avoir accès à la mémoire centrale (K), et soit le premier processeur (S1) de transmission de signaux, soit le second processeur (S2) de traitement de signaux peut accéder à la mémoire (MS) des processeurs de traitement de signaux, caractérisé par le fait que les processeurs (S1, S2) de traitement de signaux sont agencés de manière à pouvoir respectivement, et d'une manière indépendante, lire des données par l'intermédiaire du bus (BD) de transmission de données ou mémoriser des données par l'intermédiaire de ce bus, et qu'en vue d'obtenir un échange direct de données entre les processeurs (S1, S2) de traitement de signaux, il est prévu, entre ces derniers, une voie (DD) de transmission directe des données.

2. Système à processeurs de traitement de signaux suivant la revendication 1, caractérisé par le fait que les processeurs (S1, S2) de traitement de signaux sont agencés de manière à pouvoir, d'une manière indépendante, lire des données par l'intermédiaire du bus (BD) de transmission de données ou mémoriser des données par l'intermédiaire de ce bus, à l'aide d'un dispositif auxiliaire, par exemple un dispositif de commande d'interface.

3. Procédé pour la mise en œuvre d'un système à processeurs de traitement de signaux suivant l'une des revendications précédentes, selon lequel une synchronisation nécessaire des processeurs (S1, S2, P) est réalisée par l'intermédiaire du bus de commande (BS) et au moyen du registre de commande (RS) de telle sorte que le processeur de système (P) peut exécuter des processus d'interruption, des processus de remise à l'état initial, etc, et selon lequel celui des deux processeurs (S1 ou S2) de transmission de signaux, qui a respectivement accès au bus (BD) de transmission de données et, par conséquent, à la mémoire centrale (K) envoie une signalisation correspondante ou un signal d'interruption directement, par l'intermédiaire du registre de commande (RS), au processeur de système (P), et selon lequel les interrupteurs (B1, $\overline{B1}$ ; B2, $\overline{B2}$) sont commandés par le processeur de système (P), par l'intermédiaire du bus de commande (BS), caractérisé par le fait qu'une signalisation est envoyée, par celui des processeurs (S1, S2, P), qui a achevé sa tâche, par l'intermédiaire du bus de commande (BS), aux autres dispositifs respectifs et qu'un échange nécessaire de données est exécuté par l'intermédiaire de la mémoire centrale (K).